# EUROPÄISCHE PATENTANMELDUNG

(11) **EP 2 133 527 A1**
(43) Veröffentlichungstag der Anmeldung: **16.12.2009**
(21) Anmeldenummer: 09100242.8
(22) Anmeldetag: 22.04.2009
(51) Int. Cl.: F01N 3/20, B01D 53/94

(54) **Abgasnachbehandlungseinrichtung für eine Brennkraftmaschine mit einem SCR-Katalysator und Verfahren zum Betreiben einer Brennkraftmaschine**

(30) Priorität: 09.06.2008 DE 102008002286
(71) Anmelder: Robert Bosch GmbH, 70442 Stuttgart (DE)
(72) Erfinder: Riegger, Peter, 88662 Ueberlingen (DE); Gloeckle, Markus, 70192 Stuttgart (DE)

(57) **Zusammenfassung**

Es wird eine Abgasnachbehandlungseinrichtung (3) mit einem SCR-Katalysator (11) und einem Injektor (13) zum Eindüsen eines flüssigen Reduktionsmittels vorgeschlagen, bei dem die Abgasnachbehandlungseinrichtung (3) im Bereich des Injektors (13) eine Heizung, insbesondere eine elektrische Widerstandsheizung (19), aufweist. Dadurch können Ablagerungen in dem Abgasrohr (5) beziehungsweise dem Stutzen (17) abgebaut werden.

## Beschreibung

### Stand der Technik

Die bei Diesel- oder Magermotor-betriebenen Fahrzeugen immer schärfer werdenden Stickoxide NOx-Emissionsgrenzwerte erfordern ab einem bestimmten Fahrzeuggewicht eine die Stickoxide reduzierende Abgasnachbehandlung. Eine aus dem Stand der Technik bekannte, sehr wirksame Abgasnachbehandlung ist die sogenannte selektive katalytische Reaktion (SCR). Dabei wird ein Reduktionsmittel, nämlich Ammoniak, das aus Harnstoff erzeugt wurde, bei Bedarf in die Abgasnachbehandlungseinrichtung der Brennkraftmaschine eingedüst und reagiert in einem speziellen Katalysator zusammen mit den Stickoxiden der Abgase zu den unschädlichen Verbindungen Stickstoff und Wasser. Ein Beispiel einer solchen SCR-Abgasnachbehandlung mit flüssigem Reduktionsmittel ist aus der EP 1 422 395 A2 bekannt.

Der dazu erforderliche Harnstoff wird in Form einer Lösung, die 32,5 Gewichts-% Harnstoff enthält, direkt in das Abgasrohr eingespritzt. Im Zusammenhang mit der Erfindung wird stets von flüssigem Reduktionsmittel gesprochen, da die Erfindung nicht auf die oben genannte Harnstoff-Wasser-Lösung als Reduktionsmittel beschränkt ist.

Beim Einspritzen des Reduktionsmittels kann es zu Ablagerungen in der Abgasnachbehandlungseinrichtung kommen. Diese können das Einspritzen des Reduktionsmittels erschweren oder sogar vollständig unterbinden. Infolgedessen wird die Wirksamkeit der selektiven katalytischen Reaktion gemindert.

### Offenbarung der Erfindung

Der Erfindung liegt die Aufgabe zugrunde, eine Abgasnachbehandlungseinrichtung für eine Brennkraftmaschine, die einen SCR-Katalysator aufweist und einen Injektor zum Eindüsen des Reduktionsmittels oberhalb des SCR-Katalysators in die Abgasnachbehandlungseinrichtung aufweist, bereitzustellen, dessen Wirksamkeit auch über sehr große Zeiträume unverändert hoch ist.

Diese Aufgabe wird erfindungsgemäß bei einer Abgasnachbehandlungseinrichtung für eine Brennkraftmaschine mit einem Abgasrohr, mit einem SCR-Katalysator, mit einer Einspritzeinrichtung für ein Reduktionsmittel und mit einem Injektor für ein Reduktionsmittel, wobei der Injektor stromaufwärts des SCR-Katalysators angeordnet ist, dadurch gelöst, dass die Abgasnachbehandlungseinrichtung mindestens bereichsweise beheizbar ist.

Dadurch ist es möglich, bei Bedarf die Abgasnachbehandlungseinrichtung beziehungsweise das Abgasrohr dort, wo sich Ablagerungen bilden, auf Temperaturen von bevorzugt etwa 350°C, besonders bevorzugt jedoch größer 450°C, aufzuheizen und dadurch die Ablagerungen thermisch und/oder hydrolytisch zu zersetzen.

Es ist bekannt, dass bereits bei Temperaturen von etwa 350°C ein Großteil der Ablagerungen abgebaut wird. Die nahezu vollständige Zersetzung der Ablagerungen erfolgt bei Temperaturen oberhalb von 450°C.

In weiterer vorteilhafter Ausgestaltung der Erfindung ist das Abgasrohr im Bereich des Injektors beheizbar, da naturgemäß dort, wo das Reduktionsmittel in das Abgasrohr eingespritzt wird, die Gefahr von Ablagerungen am größten ist.

Es kann jedoch auch modellspezifisch in jeder Abgasnachbehandlungseinrichtung dort, wo sich während des Betriebs Ablagerungen bilden, eine erfindungsgemäße Heizung vorgesehen werden.

Als besonders einfache, leistungsfähige und kostengünstige Heizung haben sich elektrische Widerstandsheizungen bewährt. Die erfindungsgemäße elektrische Widerstandsheizung kann innen oder außen an dem Abgasrohr beziehungsweise der Abgasnachbehandlungseinrichtung angeordnet werden.

Um die Heizleistung der erfindungsgemäßen Heizung zu minimieren, empfiehlt es sich, die Abgasnachbehandlungseinrichtung im Bereich der Heizung mit einer Wärmedämmung zu versehen. Dies kann dadurch erfolgen, dass das Abgasrohr im Bereich der elektrischen Widerstandsheizung doppelwandig ausgeführt ist und/oder dadurch, dass eine Wärmedämmschicht aufgebracht wird. Diese Wärmedämmschicht kann beispielsweise eine Emailschicht sein, die neben der Wärmedämmung auch eine sehr hohe Temperaturbeständigkeit aufweist.

Die erfindungsgemäße elektrische Widerstandsheizung kann in Form einer oder mehrerer Heizwendel oder einer Heizmanschette ausgebildet sein.

Um den Injektor für das Reduktionsmittel thermisch von dem Abgasrohr und der erfindungsgemäßen Heizeinrichtung zu entkoppeln, ist weiter vorgesehen, zwischen Injektor und Abgasrohr ein Zwischenstück aus einem Material mit schlechter Wärmeleitfähigkeit, insbesondere aus Keramik oder Edelstahl, vorzusehen. Selbstverständlich ist es auch möglich, die thermische Entkopplung durch eine geeignete konstruktive Ausgestaltung des Zwischenstücks, wie zum Beispiel eine Luftspaltisolierung, zu erreichen.

Die eingangs genannte Aufgabe wird ebenfalls erfindungsgemäß durch ein Verfahren zum Betreiben einer Abgasnachbehandlungseinrichtung für eine Brennkraftmaschine mit einem Abgasrohr, mit einem SCR-Katalysator, mit einer Einspritzeinrichtung für ein Reduktionsmittel und mit einer Heizung dadurch gelöst, dass die Heizung nur zeitweise aktiviert wird. Dadurch wird der Heizenergiebedarf auf das erforderliche Minimum reduziert und der durch die Heizenergie erforderliche Kraftstoffmehrverbrauch der Brennkraftmaschine reduziert.

Es hat sich insbesondere als vorteilhaft erwiesen, die Heizung dann zu aktivieren, wenn Reduktionsmittel in das Abgasrohr eingespritzt wird, da nur zu diesem Zeitpunkt überhaupt Ablagerungen entstehen können.

Des Weiteren ist es auch möglich, die Heizung nur dann zu aktivieren, wenn ein Dieselpartikelfilter regeneriert wird, da die Regeneration des stromaufwärts angeordneten Dieselpartikelfilters exotherm ist und infolgedessen die Abgastemperaturen vergleichsweise hoch sind. Entsprechendes gilt, wenn die Brennkraftmaschine mit hoher Last, insbesondere mit mehr als 70% der Volllast, betrieben wird. Auch dann sind die Abgastemperaturen vergleichsweise hoch und der Heizenergiebedarf zur Erreichung der erforderlichen Temperaturen von 350°C beziehungsweise 450°C wird entsprechend reduziert.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

Es zeigen:
- Figur 1: den schematischen Aufbau einer erfindungsgemäßen Abgasnachbehandlungseinrichtung; und
- Figuren 2 bis 4: Ausführungsbeispiele erfindungsgemäßer Heizungen der Abgasnachbehandlungseinrichtung.

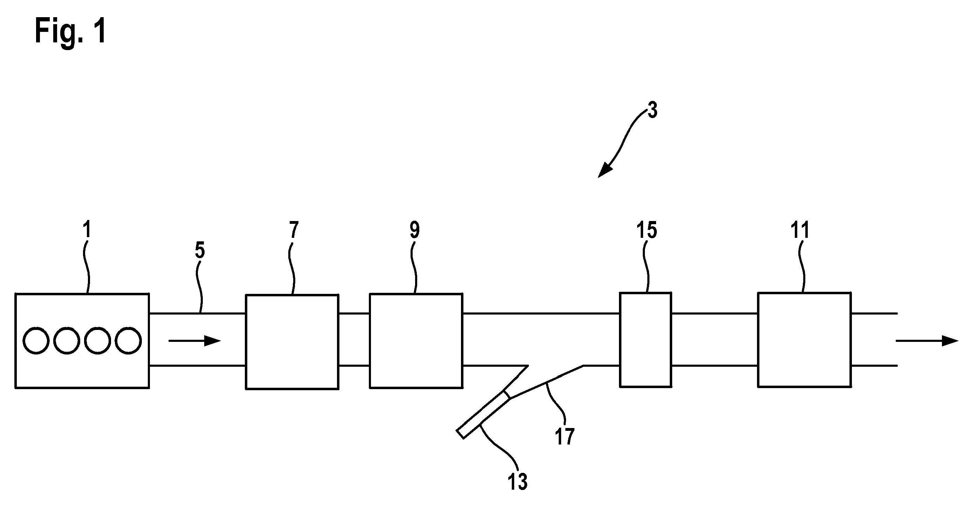

In Figur 1 ist eine Brennkraftmaschine 1 mit einer Abgasnachbehandlungseinrichtung 3 stark vereinfacht und schematisch dargestellt. Die Abgasnachbehandlungseinrichtung 3 umfasst ein Abgasrohr 5, einen Oxidationskatalysator 7, einen Partikelfilter 9 und einen SCR-Katalysator 11. Die Strömungsrichtung des Abgases durch das Abgasrohr 5 ist durch Pfeile (ohne Bezugszeichen) angedeutet.

Um den SCR-Katalysator 11 mit Reduktionsmittel zu versorgen, sind stromaufwärts des SCR-Katalysators 11 ein Injektor 13 für das Reduktionsmittel und ein Mischer 15 angeordnet. Der Injektor 1 wird über eine nicht dargestellte Pumpe mit Reduktionsmittel versorgt und spritzt dieses bei Bedarf oberhalb des Mischers 15 in das Abgasrohr 5 ein.

Der Injektor 13 ist an einem Stutzen 17 befestigt, der am Abgasrohr 5 ausgebildet ist. Im Bereich des Stutzens 17 und im Bereich des Mischers 15 können sich beim Betrieb der Brennkraftmaschine und infolge des Eindüsens von Reduktionsmittel Ablagerungen bilden, die beispielsweise Cyanursäure (HNCO)₃, Biuret oder Triuret enthalten.

Wenn diese Ablagerungen (nicht dargestellt) zu dick werden, setzt sich der Stutzen 17 zu und infolgedessen ist es nicht mehr möglich, Reduktionsmittel in die Abgasnachbehandlungseinrichtung 3 einzudüsen, so dass der SCR-Katalysator 11 wirkungslos wird.

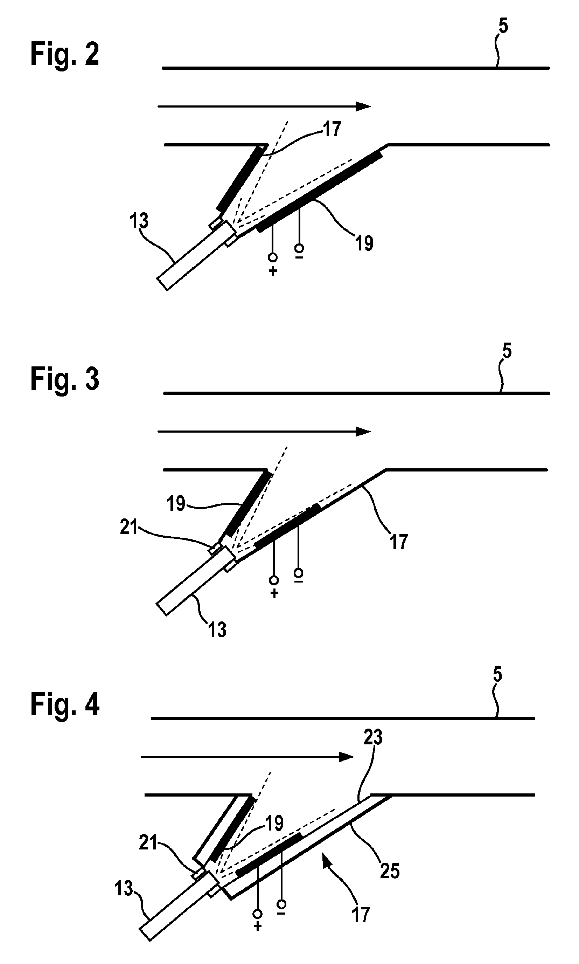

In den Figuren 2 bis 4 sind Ausführungsbeispiele erfindungsgemäßer Heizungen der Abgasnachbehandlungseinrichtung 3 am Beispiel des Stutzens 17 vergrößert und etwas detaillierter dargestellt.

Wie aus der Figur 2 ersichtlich, ist der Injektor 17 dichtend in dem Stutzen 17 befestigt. Dies kann beispielsweise durch ein nicht dargestelltes Schraubgewinde sein.

Der vom Injektor 13 eingedüste Strahl von Reduktionsmittel ist in den Figuren 2 bis 4 durch gestrichelte Linien dargestellt.

Wie sich aus diesen Linien ergibt, ist es kaum zu vermeiden, dass ein Teil des Reduktionsmittels sich an den Wänden des Abgasrohrs 5 beziehungsweise des Stutzens 17, der ja ein Teil des Abgasrohrs 5 darstellt, niederschlägt. Dort kann es unerwünschter Weise zu Ablagerungen (nicht dargestellt) kommen.

Erfindungsgemäß ist nun vorgesehen, an den Stellen des Abgasrohrs 5 beziehungsweise des Stutzens 17, an denen sich diese Ablagerungen bilden, eine Heizung, insbesondere eine elektrische Widerstandsheizung 19, vorzusehen. Diese Heizung 19 wird eingesetzt, um die Ablagerungen auf mindestens 350°C, bevorzugt 450°C, zu erhitzen. Bei diesen Temperaturen zersetzen sich die Ablagerungen zu flüchtigen Verbindungen und lösen sich dadurch auf. Da sich bei der Zersetzung gasförmige Zersetzungsprodukte bilden, wird das Ablösen der Ablagerungen von dem Stutzen 17 beziehungsweise dem Abgasrohr 5 weiter unterstützt. Die Ursache hierfür ist, dass beim Übergang von der festen in die gasförmige Phase die Zersetzungsprodukte eine Volumenarbeit leisten und dadurch die noch vorhandenen festen Ablagerungspartikel gewissermaßen von der Oberfläche der Abgasnachbehandlungseinrichtung absprengen beziehungsweise abplatzen lassen.

Bei dem Ausführungsbeispiel gemäß Figur 2 ist die elektrische Widerstandsheizung 19 außen am Stutzen 17 angeordnet. Die elektrische Widerstandsheizung kann als eine oder mehrere Heizwendel oder als Heizmanschette ausgebildet sein. Grundsätzlich kann jede Form einer elektrischen Widerstandsheizung, welche ausreichend temperaturbeständig ist, eingesetzt werden.

Damit der Injektor 13 nicht mit den hohen Temperaturen im Bereich des Stutzens 17 beaufschlagt wird, ist zwischen dem Injektor 13 und dem Stutzen 17 ein Zwischenstück 21 angeordnet, das aus einem Material mit einer schlechten Wärmeleitfähigkeit, wie beispielsweise Keramik oder Edelstahl, hergestellt wird. Selbstverständlich ist es auch möglich, einen temperaturbeständigen Werkstoff zu verwenden und durch konstruktive Ausgestaltungen des Zwischenstücks 21 die Wärmeübertragung zwischen dem Stutzen 17 und dem Injektor 13 zu minimieren.

In Figur 3 ist ein weiteres Ausführungsbeispiel einer erfindungsgemäßen Abgasnachbehandlungseinrichtung dargestellt. Der wesentliche Unterschied zu dem Ausführungsbeispiel gemäß Figur 2 besteht darin, dass die elektrische Widerstandsheizung 19 in diesem Fall innerhalb des Stutzens angeordnet ist. Dadurch bilden sich die Ablagerungen direkt auf der elektrischen Widerstandsheizung 19 und die erforderliche Heizleistung der Widerstandsheizung 19 wird reduziert.

Eine weitere Reduktion der erforderlichen Heizleistung ergibt sich, wenn der Stutzen 17 doppelwandig ausgeführt ist, wie in Figur 4 dargestellt. Dabei ist die elektrische Widerstandsheizung an einer inneren Wand 23 angeordnet, die zur weiteren Verringerung der Wärmeleitung besonders dünnwandig ausgeführt ist. Eine äußere Wand 25 des Stutzens 17 ist dickwandiger ausgeführt und verleiht dem Stutzen 17 die erforderliche mechanische Festigkeit.

## Patentansprüche

1. Abgasnachbehandlungseinrichtung für eine Brennkraftmaschine mit einem Abgasrohr (5), mit einem SCR-Katalysator (11), mit einem Injektor (13) zum Einspritzen eines Reduktionsmittels in das Abgasrohr (5), wobei der Injektor (13) stromaufwärts des SCR-Katalysators (11) angeordnet ist, **dadurch gekennzeichnet, dass** die Abgasnachbehandlungseinrichtung (3) mindestens bereichsweise beheizbar ist.

2. Abgasnachbehandlungseinrichtung nach Anspruch 1, **dadurch gekennzeichnet, dass** das Abgasrohr (5) im Bereich des Injektors (13) beheizbar ist.

3. Abgasnachbehandlungseinrichtung nach Anspruch 1, **dadurch gekennzeichnet, dass** das Abgasrohr (5, 17) mindestens in unmittelbarer Nähe des Injektors (13) eine elektrische Widerstandsheizung (19) aufweist.

4. Abgasnachbehandlungseinrichtung nach Anspruch 3, **dadurch gekennzeichnet, dass** die elektrische Widerstandsheizung (19) innen oder außen an dem Abgasrohr (5, 17) angeordnet ist.

5. Abgasnachbehandlungseinrichtung nach einem der vorhergehenden Ansprüche, **dadurch gekennzeichnet, dass** das Abgasrohr (5) im Bereich der elektrischen Widerstandsheizung (19) doppelwandig (23, 25) ausgeführt ist.

6. Abgasnachbehandlungseinrichtung nach einem der vorhergehenden Ansprüche, **dadurch gekennzeichnet, dass** das Abgasrohr (5) im Bereich der elektrischen Widerstandsheizung (19) eine Wärmedämmung, insbesondere eine keramische Beschichtung oder eine Emailschicht, aufweist.

7. Abgasnachbehandlungseinrichtung nach einem der vorhergehenden Ansprüche, **dadurch gekennzeichnet, dass** zwischen Injektor (13) und Abgasrohr (5, 17) ein Zwischenstück (21) aus einem Material mit schlechter Wärmeleitfähigkeit, insbesondere aus Keramik oder Edelstahl, vorgesehen ist.

8. Verfahren zum Betreiben einer Abgasnachbehandlungseinrichtung für eine Brennkraftmaschine mit einem Abgasrohr (5), mit einem SCR-Katalysator (11), mit einer Einspritzeinrichtung (13) für ein Reduktionsmittel und mit einer Heizung (19), **dadurch gekennzeichnet, dass** die Heizung (19) nur zeitweise aktiviert wird.

9. Verfahren nach Anspruch 8, **dadurch gekennzeichnet, dass** die Heizung (19) aktiviert wird, wenn Reduktionsmittel in das Abgasrohr (5) eingespritzt wird.

10. Verfahren nach Anspruch 8, **dadurch gekennzeichnet, dass** die Heizung (19) aktiviert wird, wenn ein Dieselpartikelfilter (9) regeneriert wird.

11. Verfahren nach Anspruch 8, **dadurch gekennzeichnet, dass** die Heizung (19) aktiviert wird, wenn die Brennkraftmaschine mit hoher Last, insbesondere mit mehr als 70% der Volllast, betrieben wird.
